# EUROPÄISCHE PATENTSCHRIFT

(11) **EP 4 634 695 B1**
(45) Veröffentlichungstag und Bekanntmachung des Hinweises auf die Patenterteilung: **18.11.2026**
(21) Anmeldenummer: 23814370.5
(22) Anmeldetag: 27.11.2023
(51) Int. Cl.: G01S 13/931, G01S 13/42, G01S 13/58, G01S 13/86, B60Q 9/00, G06V 20/58, B60R 21/0134

(54) **VERFAHREN ZUM UNTERSTÜTZEN EINES INSASSEN BEIM AUSSTEIGEN AUS EINEM FAHRZEUG MIT ANPASSUNG EINER WARNZONE, RECHENEINRICHTUNG SOWIE AUSSTIEGSASSISTENZSYSTEM**
METHOD FOR ASSISTING AN OCCUPANT WHEN EXITING FROM A VEHICLE WITH ADAPTATION OF A WARNING ZONE, COMPUTING DEVICE AND EXIT ASSISTANCE SYSTEM
PROCEDE D'ASSISTANCE D'UN PASSAGER A LA SORTIE D'UN VEHICULE AVEC ADAPTATION D'UNE ZONE D'AVERTISSEMENT, DISPOSITIF DE CALCUL ET SYSTEME D'ASSISTANCE A LA SORTIE

(30) Priorität: 15.12.2022 DE 102022133450
(43) Veröffentlichungstag der Anmeldung: 22.10.2025
(73) Patentinhaber: Bayerische Motoren Werke Aktiengesellschaft, 80809 München (DE)
(72) Erfinder: FOKIN, Alexey, 80687 München (DE); PETERS, Frank, 85405 Nandlstadt (DE); TSCHOEPE, Werner, 81477 München (DE)
(86) Internationale Anmeldenummer: PCT/EP2023/083208
(87) Internationale Veröffentlichungsnummer: WO 2024/126019

(56) Entgegenhaltungen:
- EP-A1- 1 433 657
- US-A1- 2013 234 844
- US-A1- 2021 070 220

## Beschreibung

Die vorliegende Erfindung betrifft ein Verfahren zum Unterstützen eines Insassen beim Aussteigen aus einem Fahrzeug. Darüber hinaus betrifft die vorliegende Erfindung eine Recheneinrichtung für ein Ausstiegsassistenzsystem eines Fahrzeugs. Außerdem betrifft die vorliegende Erfindung ein Ausstiegsassistenzsystem für ein Fahrzeug mit einer derartigen Recheneinrichtung. Schließlich betrifft die vorliegende Erfindung ein Computerprogramm.

Aus dem Stand der Technik sind unterschiedliche Fahrerassistenzsysteme bekannt, welche einen Insassen bzw. einen Fahrer beim Betrieb des Fahrzeugs unterstützen. Vorliegend gilt das Interesse insbesondere solchen Fahrerassistenzsystemen, welche einen Insassen beim Aussteigen aus dem Fahrzeug unterstützen. Derartige Fahrerassistenzsysteme, welche auch als Ausstiegswarnsysteme bezeichnet werden, umfassen üblicherweise einen Sensor, mit welchem ein Öffnen einer Tür des Fahrzeugs durch den Insassen erkannt werden kann. Darüber hinaus weisen diese Ausstiegswarnsysteme zumindest einen Umfeldsensor auf, mit welchem Objekte bzw. weitere Verkehrsteilnehmer in der Umgebung des Fahrzeugs erfasst werden können. In Abhängigkeit von den erfassten Objekten kann dann der Insasse gewarnt werden, um eine Kollision zwischen der geöffneten Tür und dem Objekt zu verhindern.

Bei den bekannten Ausstiegswarnsystemen werden Radarsensoren bzw. die Seitenradare genutzt, um die Objekte bzw. weitere Verkehrsteilnehmer in der Umgebung zu erfassen. Dabei wird üblicherweise eine so genannte Warnzone in der Umgebung des Fahrzeugs definiert. Falls sich ein Objekt bzw. ein weiterer Verkehrsteilnehmer innerhalb dieser Warnzone befindet, wird die Warnung an den Fahrer bzw. Insassen ausgegeben. Üblicherweise wird die Warnzone auf Grundlage einer Kollisionszeit (TTC -Time to Collision) ermittelt. Ferner kann der Warnzone beispielsweise derart bestimmt werden, dass diese eine definierte Breite aufweist.

In diesem Zusammenhang offenbart die EP 1 433 657 A1 ein Verfahren zur Tür-Kollisions-Warnung bei einem Kraftfahrzeug. Das Verfahren umfasst das Überwachen von zumindest dem fahrerseitigen Seitenrückraum einer vorgegebenen Breite und Tiefe. Außerdem umfasst das Verfahren das Erfassen eines Objekts in dem zu überwachenden Seitenrückraum sowie das Bestimmen des Abstands und der Geschwindigkeit des erfassten Objekts. Ferner wird eine Warndistanz als Funktion der Objektgeschwindigkeit und einer vorgegebenen Gesamtreaktionszeit berechnet. Ein Warnsignal wird dann ausgegeben, wenn der Objektabstand kleiner als die Warndistanz ist. Vorzugsweise können beide Seiten des Kraftfahrzeugs überwacht werden, wobei insbesondere die Breite eines zu überwachenden Rückraums kleiner oder gleich 3 Meter sein kann.

Zudem offenbart die US 2013/234844 A1 ein System zur Warnung eines Fahrzeugtürbenutzers vor unsicheren Türöffnungsbedingungen überwachen kontinuierlich die Umgebung des Fahrzeugs. Das System definiert eine Türfreigabezone, indem es den gesamten Bereich identifiziert, den die Tür beim vollständigen Öffnen durchschreitet. Das System erweitert die Türfreigabezone, um eine Ein- und Ausstiegsfreigabezone zu definieren. Darüber hinaus erkennt das System kontinuierlich Fahrzeuge oder Objekte, die sich entweder aktuell innerhalb der Türfreigabezone oder der Ein-/Ausstiegsfreigabezone befinden oder sich voraussichtlich dort befinden werden. Für alle identifizierten Objekte oder Fahrzeuge, die sich aktuell oder voraussichtlich in einer der beiden Freigabezonen befinden, gibt das System ein visuelles oder akustisches Warnsignal an den Benutzer aus, das darauf hinweist, dass es unsicher ist, die Fahrzeugtür zu öffnen.

Ferner zeigt die US 2021/070220 A1 ein System, mittels welchem während des Betreibens eines Fahrzeugs in einem autonomen Modus folgende Schritte durchgeführt werden: Bestimmen einer Zwischenhaltestelle; auf Grundlage der Bestimmung Versuchen, Kommunikation mit einem intelligenten Knoten aufzubauen; wenn Kommunikation mit dem intelligenten Knoten aufgebaut wird, Abfragen des intelligenten Knotens bezüglich dessen, ob eine Fahrzeugtür in eine offene Position betätigt werden soll; und wenn keine Kommunikation mit dem intelligenten Knoten aufgebaut wird, Bestimmen, ob die Fahrzeugtür in die offene Position betätigt werden soll.

Es ist Aufgabe der vorliegenden Erfindung, eine Lösung aufzuzeigen, wie eine Zuverlässigkeit eines Verfahrens zum Unterstützen eines Insassen beim Aussteigen aus einem Fahrzeug der eingangs genannten Art verbessert werden kann.

Diese Aufgabe wird erfindungsgemäß durch ein Verfahren, durch eine Recheneinrichtung, durch ein Ausstiegswarnsystem sowie durch ein Computerprogramm mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Unterstützen eines Insassen bei einem Aussteigen aus einem Fahrzeug. Das Verfahren umfasst das Empfangen von Öffnungsdaten, welche ein bevorstehendes Öffnen einer Tür des Fahrzeugs durch den Insassen beschreiben. Darüber hinaus umfasst das Verfahren das Empfangen von Objektdaten, welche eine Position und eine Geschwindigkeit von einem Objekt in einer Umgebung des Fahrzeugs beschreiben. Zudem umfasst das Verfahren das Überprüfen, ob sich das Objekt in einer vorbestimmten Warnzone in der Umgebung des Fahrzeugs befindet, wobei innerhalb der Warnzone eine Kollision zwischen dem Objekt und der Tür droht. Des Weiteren umfasst das Verfahren das Ausgeben einer Warnung, falls sich das Objekt innerhalb der Warnzone befindet. Zudem umfasst das Verfahren das Erfassen von zumindest einem Fahrstreifen in der Umgebung des Fahrzeugs sowie das Bestimmen einer Formgebung des zumindest einen Fahrstreifens. Ferner wird die Warnzone in Abhängigkeit von der Formgebung des zumindest einen Fahrstreifens vorbestimmt.

Mit Hilfe des Verfahrens soll ein Insasse des Fahrzeugs beim Aussteigen aus dem Fahrzeug unterstützt werden. Dabei kann sich der Insasse auf einem Fahrersitz, einem Beifahrersitz und/oder einem Rücksitz des Fahrzeugs befinden. Grundsätzlich kann das Verfahren für das Aussteigen aller Insassen aus dem Fahrzeug genutzt werden. Das Verfahren kann beim Öffnen der jeweiligen Türen des Fahrzeugs, also der Fahrertür, der Beifahrertür und/oder den Türen im Fond, genutzt werden. Das Verfahren kann mit einer Recheneinrichtung eines Ausstiegwarnsystems durchgeführt werden. Die Recheneinrichtung kann durch zumindest ein elektronisches Steuergerät des Fahrzeugs, einen Prozessor oder dergleichen gebildet sein.

Mittels der Recheneinrichtung können Öffnungsdaten empfangen werden, welche beispielsweise von einem Sensor bzw. einem Öffnungssensor bereitgestellt werden. Mit diesem Öffnungssensor kann beispielsweise das Öffnen eines Türkontakts der Tür und/oder eine Berührung eines Hebels bzw. eines Bedienelements zum Öffnen der Tür erfasst werden. Alternativ oder zusätzlich kann es sich bei dem Öffnungssensor um eine Innenraumkamera handeln, mittels welcher die Bewegungen des Insassen erfasst werden können. Diese Öffnungsdaten können mittels der Recheneinrichtung des Ausstiegwarnsystems entsprechend ausgewertet werden und dabei kann erkannt werden, dass der Insasse die Tür öffnet oder öffnen möchte. Ferner kann anhand der Öffnungsdaten ein (voraussichtlicher) Zeitpunkt für das Öffnen der Tür bestimmt werden.

Mit der Recheneinrichtung können zudem die Objektdaten empfangen werden, welche Objekte bzw. weitere Verkehrsteilnehmer in der Umgebung des Fahrzeugs beschreiben. Insbesondere beschreiben die Objektdaten die jeweilige Position und/oder Geschwindigkeit der Objekte. Die Objektdaten können mit dem Umfeldsensor oder auch mit mehreren Umfeldsensoren des Fahrzeugs bereitgestellt werden. Bei dem zumindest einen Umfeldsensor kann es sich um einen Abstandssensor handeln, mittels welchem fortlaufend der Abstand zwischen dem Fahrzeug und dem Objekt bestimmt werden kann. Zudem kann mit dem Abstandssensor die Geschwindigkeit des Fahrzeugs ermittelt werden. Der Umfeldsensor kann insbesondere als Radarsensor ausgebildet sein. Anhand der Objektdaten kann dann mittels der Recheneinrichtung überprüft werden, ob sich Objekte bzw. weitere Verkehrsteilnehmer in der Umgebung des Fahrzeugs befinden. Bei den Objekten kann es sich beispielsweise um weitere Fahrzeuge, Fahrradfahrer, Motorradfahrer oder dergleichen handeln.

Mittels der Recheneinrichtung kann zudem die Warnzone definiert werden. Dabei kann die Warnzone derart bestimmt werden, dass eine Kollision zwischen der sich öffnenden Tür und dem Objekt droht, falls sich das Objekt innerhalb der Warnzone befindet. Beispielsweise kann die Warnzone auf Grundlage einer Kollisionszeit (TTC - Time to Collision) bestimmt werden. Diese Kollisionszeit beschreibt insbesondere die Zeitdauer zwischen dem Öffnen der Tür und einer möglichen Kollision zwischen dem Objekt und der geöffneten Tür. Zudem kann bei der Bestimmung der Warnzone der Schwenkbereich der Tür berücksichtigt werden.

Bei einer drohenden Kollision kann mittels einer entsprechenden Warneinrichtung des Ausstiegswarnsystems eine Warnung an den oder die Insassen ausgegeben werden. Dabei kann die Warnung optisch, akustisch und/oder haptisch ausgegeben werden. Grundsätzlich kann hierbei auch zwischen einer Warnung und einer Akutwarnung unterschieden werden. Die Warnung kann auch in der Form ausgegeben werden, dass ein Öffnen der Tür aktiv unterbunden und/oder eine Bewegung der sich öffnenden Tür blockiert wird.

Gemäß der vorliegenden Erfindung ist vorgesehen, dass zumindest ein Fahrstreifen in der Umgebung des Fahrzeugs erfasst wird. Beispielsweise können entsprechende Daten empfangen werden, welche die Fahrstreifen in der Umgebung des Fahrzeugs beschreiben. Bei den Fahrstreifen kann es sich um Fahrstreifen handeln, welche einer Fahrbahn oder Straße zugeordnet sind. Diese Fahrstreifen können dann von weiteren Personenkraftwagen, Lastkraftwagen, Krafträdern oder dergleichen befahren werden. Es kann auch vorgesehen sein, dass es sich bei dem Fahrstreifen um einen Radfahrstreifen handelt.

Zudem ist vorgesehen, dass eine Formgebung des zumindest einen Fahrstreifens bestimmt wird. Dabei kann die Formgebung insbesondere den Verlauf und/oder die räumlichen Abmessungen des Fahrstreifens beschreiben. Zudem ist vorgesehen, dass die Warnzonenabhängigkeit von der Formgebung des zumindest einen Fahrstreifens definiert wird.

Gemäß der vorliegenden Erfindung wird berücksichtigt, dass bei bekannten Ausstiegswarnsystemen die Objekte bisher nur auf Grundlage der Abstandssensoren, insbesondere der Radarsensoren, erfasst werden. Somit kann beispielsweise nicht berücksichtigt werden, auf welcher Fahrspur bzw. auf welchem Fahrstreifen sich diese Objekte tatsächlich befinden. Insbesondere soll die Ausstiegswarnung die Insassen vor ankommenden Objekten bzw. Verkehrsteilnehmern in dem ersten Fahrstreifen neben dem Ego-Fahrzeug warnen. Da bei den bekannten Ausstiegswarnsystemen aber die Formgebung des Fahrstreifens nicht bekannt ist, kann es vorkommen, dass Warnungen fälschlicher Weise nicht ausgegeben werden. Alternativ dazu kann es der Fall sein, dass Warnungen fälschlicherweise ausgegeben werden, obwohl sich das Objekt nicht direkt in dem ersten Fahrstreifen bzw. dem angrenzenden Fahrstreifen befindet. Der Insasse, der sich in dem Fahrzeug befindet, führt für die ankommenden Objekte bzw. Fahrzeuge eine Spurzuordnung durch. Diese Spurzuordnung erfolgend bei bekannten Ausstiegswarnsystemen auf Grundlage der Daten des Radarsensors bzw. des Abstandssensors aber nicht. Somit kann es für den Kunden bzw. Insassen für Verwirrungen führen.

Erfindungsgemäß wird diesem Problem begegnet, indem der Verlauf des zumindest einen Fahrstreifens bei der Definition der Warnzone berücksichtigt wird. Insbesondere ist es vorgesehen, dass der zumindest eine Fahrstreifen in der Umgebung des Fahrzeugs erkannt wird und dass die Objekte dem erkannten Fahrstreifen zugeordnet werden. Es kann insbesondere vorgesehen sein, dass die Warnzone dem zumindest einen Fahrstreifen zugeordnet wird. Insbesondere kann die Warnzone demjenigen Fahrstreifen zugeordnet werden, der unmittelbar an das Fahrzeug angrenzt. Insgesamt kann somit die Ausgabe der Warnung bei einem Ausstiegswarnsystem verbessert werden.

Bevorzugt werden mittels einer Kamera des Fahrzeugs bereitgestellte Bilddaten, welche die Umgebung beschreiben, empfangen. Zudem wird die Formgebung des zumindest einen Fahrstreifens anhand der Bilddaten bestimmt. Üblicherweise sind moderne Fahrzeuge mit entsprechenden Kameras ausgestattet. Beispielsweise können die Fahrzeuge bzw. die Fahrerassistenzsysteme eine Frontkamera und/oder eine Heckkamera aufweisen. Mit diesen Kameras können entsprechende Bilddaten bereitgestellt werden, welche die Umgebung beschreiben. Auf Grundlage der Bilddaten können mit bekannten Methoden der Bildverarbeitung bzw. der Objekterkennung beispielsweise die jeweiligen Fahrstreifen erkannt werden und hieraus die Formgebung bzw. die räumlichen Abmessungen der Fahrstreifen ermittelt werden. Insbesondere können hierzu entsprechende Fahrbahnmarkierungen oder Begrenzungen der Fahrstreifen in den Bilddaten erkannt werden. Insgesamt kann somit die Formgebung des zumindest einen Fahrstreifen auf zuverlässige Weise ermittelt werden.

Alternativ oder zusätzlich kann es vorgesehen sein, dass digitale Kartendaten herangezogen werden, welche die Fahrstreifen in der Umgebung beschreiben. Somit kann die Formgebung des zumindest einen Fahrstreifens alternativ oder zusätzlich auf Grundlage der digitalen Kartendaten ermittelt werden. Es kann auch vorgesehen sein, dass die auf Grundlage der Bilddaten bestimmte Formgebung bzw. die auf Grundlage der Bilddaten bestimmten räumlichen Abmessungen des zumindest einen Fahrstreifens mit Hilfe der digitalen Kartendaten plausibilisiert werden.

Bevorzugt beschreibt die Formgebung eine Breite des zumindest einen Fahrstreifens und die Warnzone wird in Abhängigkeit von der Breite des zumindest einen Fahrstreifens bestimmt. Hierbei wird berücksichtigt, dass die Spurbreite der ersten Fahrspur neben dem Fahrzeug bzw. dem angrenzenden Fahrstreifen je nach Fahrstreifen unterschiedlich sein kann. Daher kann es vorkommen, dass die Ausstiegswarnung ankommende Fahrzeuge in dem ersten Fahrstreifen nicht bewarnt, wenn die Spurbreite größer ist oder beispielsweise zwischen dem Ego-Fahrzeug und dem ersten Fahrstreifen ein Radweg vorhanden ist. Zudem kann es in Abhängigkeit von der Breite des Fahrstreifens der Fall sein, dass bei bekannten Ausstiegswarnsystemen Objekte in einem zweiten Fahrstreifen neben dem Fahrzeug bewarnt werden. Durch die Berücksichtigung der Breite des zumindest einen Fahrstreifens kann diesem Problem begegnet werden und somit die Warnung korrekt ausgegeben werden. Die Breite des Fahrstreifens kann insbesondere die Abmessung des Fahrstreifens senkrecht zu einer definierten Fahrtrichtung des Fahrstreifens beschreiben.

Bevorzugt wird als die Formgebung des zumindest einen Fahrstreifens die Formgebung des unmittelbar an die Tür angrenzenden Fahrstreifens bestimmt. Wie bereits erläutert, sollen bei der Ausstiegswarnung insbesondere diejenigen Objekte bzw. Verkehrsteilnehmer berücksichtigt werden, welche sich auf dem Fahrstreifen bzw. den Fahrstreifen befinden, welche unmittelbar an das Fahrzeug bzw. die sich öffnende Tür angrenzen. Dabei kann dieser angrenzende Fahrstreifen einer Beifahrerseite und/oder einer Fahrerseite des Fahrzeugs zugeordnet sein. Somit kann die Ausstiegswarnung verbessert werden.

Weiterhin ist vorteilhaft, wenn als der zumindest eine Fahrstreifen ein Radfahrstreifen erfasst wird. Mit anderen Worten ist es gemäß einer Ausführungsform der Erfindung vorgesehen, dass neben Fahrstreifen, die einer Fahrbahn zugeordnet sind, auch Radfahrstreifen bzw. Radwege berücksichtigt werden. Somit können auch auf zuverlässige Weise Kollisionen zwischen Radfahrern und sich öffnenden Türen verhindert werden.

Weiterhin ist vorteilhaft, wenn die Formgebung einen Verlauf des zumindest einen Fahrstreifens beschreibt und die Warnzone in Abhängigkeit von dem Verlauf des zumindest einen Fahrstreifens bestimmt wird. Es kann beispielsweise der Fall sein, dass das abgestellte Fahrzeug in einem Bereich nach einer Kurve der Fahrbahn bzw. des Fahrstreifens angeordnet ist. Mit anderen Worten können also Fälle auftreten, in denen die sich annähernden Objekte eine Kurve durchfahren, bevor sie sich dem Fahrzeug annähern. Wenn nun die Formgebung des zumindest einen Fahrstreifens berücksichtigt wird, können auch hier Fehler bei der Ausstiegswarnung verhindert werden.

In einer weiteren Ausführungsform wird ein Vorhandensein einer baulichen Trennung zwischen dem Fahrzeug und dem zumindest einen Fahrstreifen überprüft und die Warnung wird in Abhängigkeit von dem Vorhandensein der baulichen Trennung ausgegeben. Zunächst kann überprüft werden, ob eine derartige bauliche Trennung vorhanden ist. Falls beispielsweise eine derartige bauliche Trennung vorhanden ist, kann ein Ausgeben der Warnung unterbleiben. Dies gilt insbesondere für den Fall, dass eine bauliche Trennung in Form einer Wand bzw. einer Leitplanke vorhanden ist und somit das Objekt diese bauliche Trennung nicht überwinden kann bzw. überwinden wird und somit nicht in die Warnzone eintreten wird. Es kann zudem der Fall sein, dass die bauliche Trennung zwischen dem Fahrzeug und der Fahrbahn derart ausgestaltet ist, dass bei einem Öffnen der Tür die Tür aufgrund der Abmessungen der baulichen Trennung nicht in den Bereich der Fahrbahn gelangt bzw. gelangen soll. Dies kann bei einer baulichen Trennung in Form einer Grünfläche oder eines sogenannten Sicherheitsstreifens der Falls sein. Auch in diesem Fall kann von einer Ausgabe der Ausstiegswarnung abgesehen werden.

Eine erfindungsgemäße Recheneinrichtung für ein Ausstiegswarnsystem eines Fahrzeugs ist dazu eingerichtet, Öffnungsdaten, welches ein bevorstehendes Öffnen einer Tür des Fahrzeugs durch einen Insassen beschreiben, zu empfangen. Darüber hinaus ist die Recheneinrichtung dazu eingerichtet, Objektdaten, welche eine Position und eine Geschwindigkeit von einem Objekt in der Umgebung des Fahrzeugs beschreiben, zu empfangen. Außerdem ist die Recheneinrichtung dazu eingerichtet, zu überprüfen, ob sich das Objekt in einer vorbestimmten Warnzone in der Umgebung des Fahrzeugs befindet, wobei innerhalb der Warnzone eine Kollision zwischen dem Objekt und der Tür droht. Des Weiteren ist die Recheneinrichtung dazu eingerichtet, eine Warnung auszugeben, falls sich das Fahrzeug innerhalb der Warnzone befindet. Außerdem ist die Recheneinrichtung dazu eingerichtet, zumindest einen Fahrstreifen in der Umgebung des Fahrzeugs zu erfassen, eine Formgebung des zumindest einen Fahrstreifens zu bestimmen und die Warnzone in Abhängigkeit von der Formgebung vorzubestimmen.

Ein erfindungsgemäßes Ausstiegswarnsystem für ein Fahrzeug umfasst eine erfindungsgemäße Recheneinrichtung. Zudem umfasst das Ausstiegswarnsystem zumindest einen Umfeldsensor zum Erfassen von Objektdaten in einer Umgebung des Fahrzeugs und/oder zum Erfassen einer Formgebung von zumindest einer Fahrbahn in der Umgebung. Des Weiteren umfasst das Ausstiegswarnsystem zumindest einen Sensor zum Erfassen einer bevorstehenden Öffnung einer Tür des Fahrzeugs sowie eine Warneinrichtung zum Ausgeben einer Warnung.

Ein erfindungsgemäßes Fahrzeug umfasst ein erfindungsgemäßes Ausstiegswarnsystem. Das Fahrzeug kann insbesondere als Personenkraftwagen ausgebildet sein.

Ein weiterer Aspekt der Erfindung betrifft ein Computerprogramm, umfassend Befehle, die bei der Ausführung des Programms durch eine Recheneinrichtung diese veranlassen, ein erfindungsgemäßes Verfahren und die vorteilhaften Ausgestaltungen davon auszuführen. Des Weiteren betrifft die Erfindung ein computerlesbares Speichermedium, umfassend Befehle, die bei der Ausführung durch eine Recheneinrichtung diese veranlassen, ein erfindungsgemäßes Verfahren und die vorteilhaften Ausgestaltungen davon auszuführen.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Ausstiegswarnsystem, für das erfindungsgemäße Fahrzeug, für das erfindungsgemäße Computerprogramm sowie für das erfindungsgemäße computerlesbare Speichermedium.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches ein Ausstiegswarnsystem zum Unterstützen eines Insassen beim Aussteigen aus dem Fahrzeug aufweist;
- Fig. 2: eine schematische Darstellung einer Verkehrssituation, bei welcher das Fahrzeug abgestellt ist und sich ein Objekt in Form eines weiteren Fahrzeugs in der Umgebung des Fahrzeugs befindet; und
- Fig. 3: eine schematische Darstellung einer weiteren Verkehrssituation, bei welcher das Fahrzeug abgestellt ist.

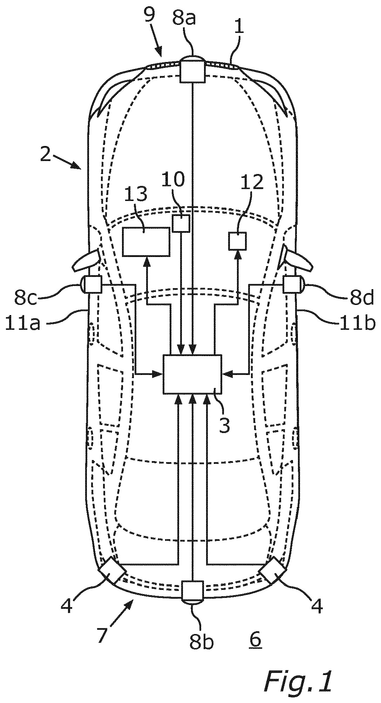

Fig. 1 zeigt in einer schematischen Darstellung ein Fahrzeug 1, welches vorliegend als Personenkraftwagen ausgebildet ist, in einer Draufsicht. Das Fahrzeug 1 umfasst ein Ausstiegswarnsystem 2, welches dazu dient, einen Insassen beim Aussteigen aus dem Fahrzeug 1 zu unterstützen. Das Ausstiegswarnsystem 2 umfasst eine Recheneinrichtung 3, welche beispielsweise durch ein elektronisches Steuergerät des Fahrzeugs 1 gebildet sein kann.

Darüber hinaus umfasst das Ausstiegswarnsystem 2 zumindest einen Umfeldsensor 4, mittels welchem Objekte 5 in einer Umgebung 6 des Fahrzeugs 1 erfasst werden können. In dem vorliegenden Beispiel umfasst das Ausstiegswarnsystem 2 zwei Umfeldsensoren 4, welche in einem Heckbereich 7 des Fahrzeugs 1 angeordnet sind. Mit den Umfeldsensoren 4 kann ein Abstand zwischen dem Umfeldsensor 4 und einem Objekt 5 in der Umgebung 6 des Fahrzeugs 1 bestimmt werden. Zudem kann auf Grundlage der Messungen der Umfeldsensoren 4 eine Relativgeschwindigkeit zwischen dem Fahrzeug 1 und dem Objekt 5 bestimmt werden. Die Umfeldsensoren 4 können insbesondere als Radarsensoren ausgebildet sein. Mit diesen Umfeldsensoren 4 können Objektdaten bereitgestellt werden, welche das Objekt 5 in der Umgebung 6 beschreiben. Diese Objektdaten können von den Umfeldsensoren 4 an die Recheneinrichtung 3 übertragen werden.

Darüber hinaus umfasst das Ausstiegswarnsystem 2 eine Mehrzahl von Kameras 8a, 8b, 8c, 8d. Dabei ist eine Kamera 8a in einem Frontbereich 9 des Fahrzeugs 1 angeordnet. Mit dieser Kamera 8a bzw. der Frontkamera können Bilddaten bereitgestellt werden, welche die Umgebung 6 in Vorwärtsrichtung von dem Fahrzeug 1 beschreiben. Mit einer Kamera 8b bzw. einer Heckkamera, welche dem Heckbereich 7 zugeordnet ist, können Bilddaten bereitgestellt werden, welche die Umgebung 6 in Vorwärtsfahrtrichtung hinter dem Fahrzeug 1 beschreiben. Mit den Kameras 8c und 8d bzw. den Seitenkameras können Bilddaten bereitgestellt werden, welche jeweils einen Bereich seitlich neben dem Fahrzeug 1 beschreiben. Die Bilddaten der jeweiligen Kameras 8a bis 8d können an die Recheneinrichtung 3 übertragen werden.

Des Weiteren umfasst das Fahrerassistenzsystem 2 einen vorliegend nur schematisch dargestellten Sensor 10 bzw. einen Öffnungssensor, mittels welchem ein Öffnen einer Tür 11a, 11b des Fahrzeugs 1 erkannt werden kann. Es kann auch vorgesehen sein, dass mit dem Sensor 10 ein Öffnungswunsch bzw. ein Bewegen des Insassen in Richtung der Tür 11a, 11b erkannt werden kann. Mit dem Sensor 10 können Öffnungsdaten bereitgestellt werden, welche das Öffnen der Tür bzw. ein bevorstehendes Öffnen der Tür 11a, 11b beschreiben. Diese Öffnungsdaten können von dem Sensor 10 an die Recheneinrichtung 3 übertragen werden. Mit dem Sensor 10 kann die Öffnung bzw. bevorstehende Öffnung der Fahrertür 11a, der Beifahrertür 11b und der hinteren Türen erfasst werden.

Außerdem umfasst das Ausstiegswarnsystem 2 eine Warneinrichtung 12, mittels welcher eine Warnung an die Insassen ausgegeben werden kann. Mittels der Warneinrichtung 12 kann beispielsweise eine akustische und/oder optische Warnung ausgegeben werden. Darüber hinaus umfasst das Ausstiegswarnsystem 2 eine Anzeigeeinrichtung 13, mittels welcher auf Grundlage der unterschiedlichen Bilddaten, die mit den Kameras 8a bis 8d bereitgestellt werden, eine Anzeige bereitgestellt werden kann.

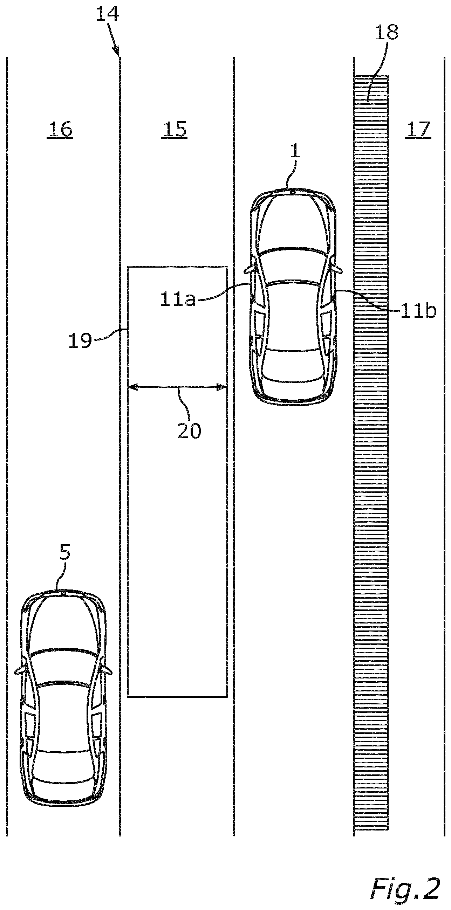

Fig. 2 zeigt in einer schematischen Darstellung eine Verkehrssituation, bei welcher das Fahrzeug 1 abgestellt ist. Beispielsweise kann das Fahrzeug 1 auf einem Parkbereich abgestellt sein. Vorliegend wird davon ausgegangen, dass ein Insasse, welcher sich auf dem Fahrersitz des Fahrzeugs 1 befindet, und auch ein Insasse, welcher sich auf dem Beifahrersitz des Fahrzeugs 1 befindet, aus dem Fahrzeug 1 aussteigen möchten. Das jeweilige bevorstehende Öffnen der Türen 11a und 11b kann mittels der Recheneinrichtung 3 anhand der Öffnungsdaten des Sensors 10 erkannt werden.

Neben der Tür 11a auf der Fahrerseite des Fahrzeugs 1 befindet sich eine Fahrbahn 14 mit einem ersten Fahrstreifen 15 und einem zweiten Fahrstreifen 16, wobei der erste Fahrstreifen 15 an das Fahrzeug 1 bzw. die Fahrertür 11a angrenzt. Auf dem zweiten Fahrstreifen 16 befindet sich ein Objekt 5 in Form eines weiteren Fahrzeugs, welches sich dem Fahrzeug 1 annähert. Dieses Objekt 5 kann auf Grundlage der Objektdaten der Umfeldsensoren 4 erfasst werden.

Bezüglich der Öffnung der Fahrertür 11a des Fahrzeugs wird eine Warnzone 19 definiert. Diese Warnzone 19 wird zum einen auf Grundlage der Kollisionszeit zwischen dem Objekt 5 und der sich öffnenden Tür 11a bestimmt. Zudem wird die Warnzone 19 auf Grundlage der Formgebung des Fahrstreifens 15, welcher an das Fahrzeug 1 angrenzt, bestimmt. Als Formgebung wird dabei eine Breite 20 des Fahrstreifens 15 ermittelt. Die Formgebung bzw. die Breite 20 des Fahrstreifens 15 wird dabei auf Grundlage der Bilddaten, die mit den Kameras 8a bis 8d bereitgestellt werden, bestimmt.

Dabei wirkt die Warnzone 19 derartig definiert, dass diese an die Breite 20 des ersten Fahrstreifens 15 angepasst ist. Somit kann erreicht werden, dass nur bei Objekten 5 bzw. weiteren Verkehrsteilnehmern, die sich auf dem relevanten ersten Fahrstreifen 15 befinden, eine Ausstiegswarnung ausgegeben wird. Bei dem vorliegenden Beispiel wird also bei dem Objekt 5, das sich auf dem zweiten Fahrstreifen 16 befindet, keine Ausstiegswarnung beim Öffnen der Tür 11a ausgegeben.

Neben der Tür 11b der Beifahrerseite des Fahrzeugs 1 befindet sich ein Radfahrstreifen 17, welcher durch eine bauliche Trennung 18 von dem Fahrzeug 1 bzw. dem Abstellbereich des Fahrzeugs 1 abgetrennt ist. Auch diese bauliche Trennung 18, welche beispielsweise durch einen Grünstreifen gebildet sein kann, wird anhand der Bilddaten der Kameras 8a bis 8d erkannt und bei der Ausgabe der Ausstiegswarnung berücksichtigt. Vorliegend ist die bauliche Trennung 18 derart ausgestaltet, dass ein sich auf dem Radfahrstreifen 17 befindlicher Fahrradfahrer nicht in einen Schwenkbereich der Beifahrertür 11b bewegen kann. Somit wird auch in diesem Fall keine Warnzone für den Radfahrstreifen 17 definiert.

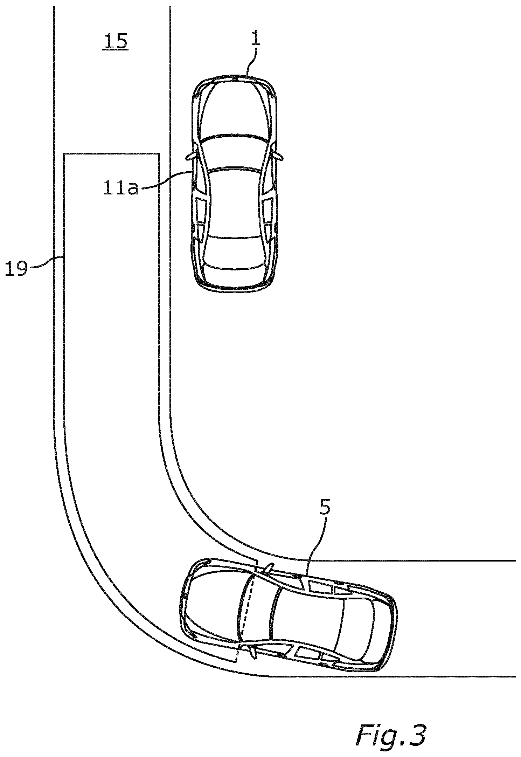

Fig. 3 zeigt in einer schematischen Darstellung eine weitere Verkehrssituation, bei welcher das Fahrzeug 1 abgestellt ist. Neben der Fahrertür 11a des Fahrzeugs 1 verläuft ein Fahrstreifen 15, welcher aktuell von einem Objekt 5 in Form eines weiteren Fahrzeugs befahren wird. Dabei weist der Fahrstreifen 15 eine Kurve auf. Wenn sich also das Objekt 5 in Richtung des Fahrzeugs 1 bewegt, durchfährt dies zunächst die Kurve, bevor es sich dem Fahrzeug 1 annähert. Auf Grundlage der Bilddaten der Kameras 8a bis 8d und/oder anhand von digitalen Kartendaten kann die Formgebung des Fahrstreifens 15 ermittelt werden. In dem vorliegenden Fall soll insbesondere der Verlauf bzw. die Krümmung des Fahrstreifens 15 ermittelt werden. Somit kann in dem vorliegenden Beispiel die Warnzone 19 an den Verlauf des Fahrstreifens 15 angepasst werden und somit rechtzeitig vor dem herannahenden Objekt 5 gewarnt werden.

Bei den Beispielen gemäß Fig. 2 und Fig. 3 wurde die Ausstiegswarnung im Zusammenhang mit der Fahrertür 11a und der Beifahrertür 11b erläutert. Die Ausstiegswarnung kann in gleicher Weise für die hinteren Türen bzw. die Türen im Fond genutzt werden.

## Patentansprüche

1. Verfahren zum Unterstützen eines Insassen bei einem Aussteigen aus einem Fahrzeug (1) mit den Schritten:
- Empfangen von Öffnungsdaten, welche ein bevorstehendes Öffnen einer Tür (11a, 11b) des Fahrzeugs (1) durch den Insassen beschreiben,
- Empfangen von Objektdaten, welche eine Position und eine Geschwindigkeit von einem Objekt (5) in einer Umgebung (6) des Fahrzeugs (1) beschreiben,
- Überprüfen, ob sich das Objekt (5) in einer vorbestimmten Warnzone (19) in der Umgebung (6) des Fahrzeugs (1) befindet, wobei innerhalb der Warnzone (19) eine Kollision zwischen dem Objekt (5) und der Tür (11a, 11b) droht,
- Ausgeben einer Warnung, falls sich das Objekt innerhalb der Warnzone (19) befindet,
**dadurch gekennzeichnet, dass**
- zumindest ein Fahrstreifen (15, 16, 17) in der Umgebung (6) des Fahrzeugs (1) erfasst wird,
- eine Formgebung des zumindest einen Fahrstreifens (15, 16, 17) bestimmt wird und
- die Warnzone (19) in Abhängigkeit von der Formgebung vorbestimmt wird.

2. Verfahren nach Anspruch 1,
**dadurch gekennzeichnet, dass**
mittels einer Kamera (8a bis 8d) bereitgestellte Bilddaten, welche die Umgebung (6) beschreiben, empfangen werden und die Formgebung des zumindest einen Fahrstreifens (15, 16, 17) anhand der Bilddaten bestimmt wird.

3. Verfahren nach Anspruch 1 oder 2,
**dadurch gekennzeichnet, dass**
die Formgebung eine Breite (20) des zumindest einen Fahrstreifens (15, 16, 17) beschreibt und die Warnzone (19) in Abhängigkeit von der Breite (20) des zumindest einen Fahrstreifens (15, 16, 17) bestimmt wird.

4. Verfahren nach Anspruch 3,
**dadurch gekennzeichnet, dass**
als die Formgebung des zumindest einen Fahrstreifens (15, 16, 17) die Formgebung des unmittelbar an die Tür (11a, 11b) angrenzenden Fahrstreifens (15, 16, 17) bestimmt wird.

5. Verfahren nach einem der vorhergehenden Ansprüche,
**dadurch gekennzeichnet, dass**
als der zumindest eine Fahrstreifen (15, 16, 17) ein Radfahrstreifen (17) erfasst wird.

6. Verfahren nach einem der vorhergehenden Ansprüche,
**dadurch gekennzeichnet, dass**
die Formgebung einen Verlauf des zumindest einen Fahrstreifens (15, 16, 17) beschreibt und die Warnzone (19) in Abhängigkeit von dem Verlauf des zumindest einen Fahrstreifens (15, 16, 17) bestimmt wird.

7. Verfahren nach einem der vorhergehenden Ansprüche,
**dadurch gekennzeichnet, dass**
ein Vorhandensein einer baulichen Trennung (18) zwischen dem Fahrzeug (1) und dem zumindest einen Fahrstreifen (15, 16, 17) überprüft wird und die Warnung in Abhängigkeit von dem Vorhandensein der baulichen Trennung (18) ausgeben wird.

8. Recheneinrichtung (3) für ein Ausstiegswarnsystem (2) eines Fahrzeugs (1), wobei die Recheneinrichtung (3) dazu eingerichtet ist:
- Öffnungsdaten, welche ein bevorstehendes Öffnen einer Tür (11a, 11b) des Fahrzeugs (1) durch einen Insassen beschreiben, zu empfangen,
- Objektdaten, welche eine Position und eine Geschwindigkeit von einem Objekt (5) in einer Umgebung (6) des Fahrzeugs (1) beschreiben, zu empfangen,
- zu überprüfen, ob sich das Objekt (5) in einer vorbestimmten Warnzone (19) in der Umgebung (6) des Fahrzeugs (1) befindet, wobei innerhalb der Warnzone (19) eine Kollision zwischen dem Objekt (5) und der Tür (11a, 11b) droht,
- eine Warnung auszugeben, falls sich das Objekt (5) innerhalb der Warnzone (19) befindet,
**dadurch gekennzeichnet, dass**
die Recheneinrichtung (3) ferner dazu eingerichtet ist:
- zumindest einen Fahrstreifen (15, 16, 17) in der Umgebung des Fahrzeugs (1) zu erfassen,
- eine Formgebung des zumindest einen Fahrstreifens (15, 16, 17) zu bestimmen und
- die Warnzone (19) in Abhängigkeit von der Formgebung vorzubestimmen.

9. Ausstiegswarnsystem (2) für ein Fahrzeug (1) umfassend eine Recheneinrichtung (3) nach Anspruch 8, zumindest einen Umfeldsensor (4) zum Erfassen von Objekten in einer Umgebung (6) des Fahrzeugs (1) und/oder zum Erfassen einer Formgebung von zumindest einer Fahrbahn (15, 16, 17) in der Umgebung (6), zumindest einen Sensor (10) zum Erfassen einer bevorstehenden Öffnung einer Tür (11a, 11b) des Fahrzeugs (1) und eine Warneinrichtung (12) zum Ausgeben einer Warnung.

10. Computerprogramm, umfassend Befehle, die bei der Ausführung des Programms durch eine Recheneinrichtung (3) diese veranlassen, ein Verfahren nach einem der Ansprüche 1 bis 7 auszuführen.

## Claims

1. A method for assisting an occupant when exiting from a vehicle (1), comprising the following steps:
- receiving opening data, which describe an imminent opening of a door (11a, 11b) of the vehicle (1) by the occupant,
- receiving object data, which describe a position and a velocity of an object (5) in the surroundings (6) of the vehicle (1),
- checking whether the object (5) is located in a predetermined warning zone (19) in the surroundings (6) of the vehicle (1), wherein a collision between the object (5) and the door (11a, 11b) threatens within the warning zone (19),
- outputting a warning if the object is located within the warning zone (19),
**characterized in that**
- at least one lane (15, 16, 17) is detected in the surroundings (6) of the vehicle (1),
- a design of the at least one lane (15, 16, 17) is determined, and
- the warning zone (19) is predetermined depending on the design.

2. The method as claimed in claim 1,
**characterized in that**
image data provided by means of a camera (8a to 8d), which describe the surroundings (6), are received and the design of the at least one lane (15, 16, 17) is determined on the basis of the image data.

3. The method as claimed in claim 1 or 2,
**characterized in that**
the design describes a width (20) of the at least one lane (15, 16, 17) and the warning zone (19) is determined depending on the width (20) of the at least one lane (15, 16, 17).

4. The method as claimed in claim 3,
**characterized in that**
the design of the lane (15, 16, 17) directly adjoining the door (11a, 11b) is determined as the design of the at least one lane (15, 16, 17).

5. The method as claimed in any one of the preceding claims,
**characterized in that**
a bicycle lane (17) is detected as the at least one lane (15, 16, 17).

6. The method as claimed in any one of the preceding claims,
**characterized in that**
the design describes a course of the at least one lane (15, 16, 17) and the warning zone (19) is determined depending on the course of the at least one lane (15, 16, 17).

7. The method as claimed in any one of the preceding claims,
**characterized in that**
a presence of a structural separation (18) between the vehicle (1) and the at least one lane (15, 16, 17) is checked and the warning is output depending on the presence of the structural separation (18).

8. A computing device (3) for an exit warning system (2) of a vehicle (1), wherein the computing device (3) is configured to:
- receive opening data, which describe an imminent opening of a door (11a, 11b) of the vehicle (1) by an occupant,
- receive object data which describe a position and a velocity of an object (5) in the surroundings (6) of the vehicle (1),
- check whether the object (5) is located in a predetermined warning zone (19) in the surroundings (6) of the vehicle (1), wherein a collision between the object (5) and the door (11a, 11b) threatens within the warning zone (19),
- output a warning if the object (5) is located within the warning zone (19),
**characterized in that**
the computing device (3) is furthermore configured to:
- detect at least one lane (15, 16, 17) in the surroundings of the vehicle (1),
- determine a design of the at least one lane (15, 16, 17), and
- predetermine the warning zone (19) depending on the design.

9. An exit warning system (2) for a vehicle (1) comprising a computing device (3) according to claim 8, at least one surroundings sensor (4) for detecting objects in the surroundings (6) of the vehicle (1) and/or for detecting a design of at least one roadway (15, 16, 17) in the surroundings (6), at least one sensor (10) for detecting an imminent opening of a door (11a, 11b) of the vehicle (1) and a warning device (12) for outputting a warning.

10. A computer program, comprising commands which, when the program is executed by a computing device (3), cause it to carry out a method according to any one of claims 1 to 7.

## Revendications

1. Procédé d'assistance à un occupant lors de la descente d'un véhicule (1), comprenant les étapes suivantes :
- réception de données d'ouverture qui décrivent l'imminence de l'ouverture d'une portière (11a, 11b) du véhicule (1) par le passager,
- réception de données d'objet qui décrivent une position et une vitesse d'un objet (5) dans un environnement (6) du véhicule (1),
- vérification si l'objet (5) se trouve dans une zone d'avertissement (19) prédéterminée dans l'environnement (6) du véhicule (1), une collision entre l'objet (5) et la portière (11a, 11b) risquant de se produire dans la zone d'avertissement (19),
- émission d'un avertissement dans le cas où l'objet se trouve dans la zone d'avertissement (19),
**caractérisé en ce que**
- au moins une voie de circulation (15, 16, 17) est détectée dans l'environnement (6) du véhicule (1),
- une conformation de l'au moins une voie de circulation (15, 16, 17) est déterminée et
- la zone d'avertissement (19) est prédéterminée en fonction de la conformation.

2. Procédé selon la revendication 1,
**caractérisé en ce que**
des données d'image mise à disposition au moyen d'une caméra (8a à 8d), lesquelles décrivent l'environnement (6), sont reçues et la conformation de l'au moins une voie de circulation (15, 16, 17) est déterminée à l'aide des données d'image.

3. Procédé selon la revendication 1 ou 2,
**caractérisé en ce que**
la conformation décrit une largeur (20) de l'au moins une voie de circulation (15, 16, 17) et la zone d'avertissement (19) est déterminée en fonction de la largeur (20) de l'au moins une voie de circulation (15, 16, 17).

4. Procédé selon la revendication 3,
**caractérisé en ce que**
la conformation de la voie de circulation (15, 16, 17) directement adjacente à la portière (11a, 11b) est déterminée en tant que conformation de l'au moins une voie de circulation (15, 16, 17).

5. Procédé selon l'une des revendications précédentes,
**caractérisé en ce que**
une piste cyclable (17) est détectée en tant que l'au moins une voie de circulation (15, 16, 17).

6. Procédé selon l'une des revendications précédentes,
**caractérisé en ce que**
la conformation décrit un tracé de l'au moins une voie de circulation (15, 16, 17) et la zone d'avertissement (19) est déterminée en fonction du tracé de l'au moins une voie de circulation (15, 16, 17).

7. Procédé selon l'une des revendications précédentes,
**caractérisé en ce que**
une présence d'une séparation structurelle (18) entre le véhicule (1) et l'au moins une voie de circulation (15, 16, 17) est vérifiée et l'avertissement est émis en fonction de la présence de la séparation structurelle (18).

8. Dispositif informatique (3) pour un système d'avertissement de descente (2) d'un véhicule (1), le dispositif informatique (3) étant configuré pour :
- recevoir des données d'ouverture qui décrivent l'imminence de l'ouverture d'une portière (11a, 11b) du véhicule (1) par un passager,
- recevoir des données d'objet qui décrivent une position et une vitesse d'un objet (5) dans un environnement (6) du véhicule (1),
- vérifier si l'objet (5) se trouve dans une zone d'avertissement (19) prédéterminée dans l'environnement (6) du véhicule (1), une collision entre l'objet (5) et la portière (11a, 11b) risquant de se produire dans la zone d'avertissement (19),
- émettre un avertissement dans le cas où l'objet (5) se trouve dans la zone d'avertissement (19),
**caractérisé en ce que**
le dispositif informatique (3) est en outre conçu pour :
- détecter au moins une voie de circulation (15, 16, 17) dans l'environnement du véhicule (1),
- déterminer une conformation de l'au moins une voie de circulation (15, 16, 17) et
- prédéterminer la zone d'avertissement (19) en fonction de la conformation.

9. Système d'avertissement de descente (2) pour un véhicule (1) comprenant un dispositif informatique (3) selon la revendication 8, au moins un capteur d'environnement (4) destiné à détecter des objets dans un environnement (6) du véhicule (1) et/ou destiné à détecter une conformation d'au moins une chaussée (6, 16, 17) dans l'environnement (15), au moins un capteur (10) destiné à détecter une ouverture imminente d'une portière (11a, 11b) du véhicule (1) et un dispositif d'avertissement (12) destiné à émettre un avertissement.

10. Programme informatique comprenant des instructions qui, lors de l'exécution du programme par un dispositif de calcul (3), amènent celui-ci à mettre en œuvre un procédé selon l'une des revendications 1 à 7.
